# EUROPÄISCHE PATENTANMELDUNG

(11) **EP 1 494 002 A1**
(43) Veröffentlichungstag der Anmeldung: **05.01.2005**
(21) Anmeldenummer: 04014658.1
(22) Anmeldetag: 23.06.2004
(51) Int. Cl.: G01G 23/37

(54) **Schnittstelle für eine Auswertevorrichtung einer Waage**

(30) Priorität: 03.07.2003 DE 20310233 U
(71) Anmelder: rinstrum Deutschland GmbH, 64367 Mühltal (DE)
(72) Erfinder: Pearson, Darren, Samford, Queensland 4520 (AU); Sellers, Dean, Annerley, Queensland 4103 (AU)
(74) Vertreter: Behrens, Helmut, Dipl.-Ing.

(57) **Zusammenfassung**

Die Erfindung betrifft eine Schnittstelle für eine Auswertevorrichtung (1) einer Waage, die als optisch gekoppelte Schnittstelle ausgebildet ist. Diese Schnittstelle dient zur Übertragung von Datensätzen zwischen der Auswertevorrichtung (1) und anschließbaren Eingabekomponenten oder anderen Systemkomponenten, wobei die Auswertevorrichtung (1) mit einer flachen Anzeige- (3) und einer Bedieneinheit (5) ausgestattet ist. Die Erfindung ist dadurch gekennzeichnet, dass auf der Anzeige- (3) oder der Bedieneinheit (5) zur optischen Kopplung ein Sichtfenster (2) und magnetische Fixiermittel (6) vorgesehen sind, durch die das Anschlussmittel zur Datenübertragung auf der Anzeige- (3) oder der Bedieneinheit (5) fixiert wird. Die Anschlussmittel sind dabei als flacher Anschlusskopf (7) ausgebildet, der auf der Anzeige- (3) oder Bedieneinheit (5) aufsetzbar ist und ebenfalls magnetische Fixiermittel enthält, wodurch er mit der Anzeige- (3) oder Bedieneinheit (5) abnehmbar verbunden ist. Bei einer besonderen Ausbildung der Erfindung sind zusätzlich noch korrespondierende mechanische Fixiermittel (4) vorgesehen, durch die die Fokussierung der optischen Kopplung der Infrarotschnittstelle sichergestellt ist.

## Beschreibung

Die Erfindung betrifft eine Schnittstelle für eine Auswertevorrichtung einer Waage gemäß dem Oberbegriff des Patentanspruchs 1.

Moderne Waagen arbeiten heute mit Wägezellen oder Gewichtsaufnehmern, die elektrische Ausgangssignale erzeugen, die der Gewichtsbelastung proportional sind. Diese Gewichtssignale werden meist elektronischen Auswertevorrichtungen zugeführt, in der die Signale verstärkt, in Digitalwerte umgewandelt und in digitaler Form dargestellt werden. Dazu sind die Auswertevorrichtungen in der Waage integriert oder in einem separaten Gehäuse untergebracht und verfügen über eine spezielle Anzeigeund Bedieneinheit. Gerade die digitale Meßwertausgabe eröffnet dem Anwender eine Vielzahl von Möglichkeiten der Meßwertanzeige und -verarbeitung, die durch die Anzeige- und Bedieneinheit gesteuert und widergegeben werden kann.

Für die visuelle Datenausgabe elektromechanischer Waagen werden meist flache Anzeigeeinheiten mit mindestens sechsstelligen Ziffernanzeigen mit LED, LCD oder Fluoreszenzanzeigen eingesetzt. Vielfach sind auch alphanumerische Anzeigen vorgesehen, die eine Darstellung jeglicher Art von Daten, Symbolen und Texten bis zur kompletten Bedienerführung gestatten. Dazu müssen die elektromechanischen Waagen mindestens zu ihrer ersten Inbetriebnahme parametriert werden, was in der Regel über eine elektronische Schnittstelle geschieht. Zur Übertragung der vorgesehenen Systemparameter wird meist eine programmgesteuerte Rechenanlage (PC) eingesetzt, die über die Schnittstelle und ein Kabel mit der Auswerteelektronik der Waage verbunden wird. Über eine derartige Schnittstelle sind aber auch andere Eingabe- oder Systemkomponenten wie Drucker, Datenspeicher oder weitere Anzeige- und Bedieneinheiten mit der Waage verbindbar. Deshalb sind derartige Schnittstellen auch für den bidirektionalen Datenaustausch ausführbar und einsetzbar.

In der Praxis werden in der Wägetechnik heute sowohl parallele als auch serielle Schnittstellen eingesetzt. Bei den parallelen Schnittstellen werden die Meßwerte und andere Daten meistens in einem BCD-Code übertragen, wobei ein relativ großer Hardwareaufwand an Datenleitungen, Kabeln und Steckern zur Übertragung notwendig ist. Deshalb werden heute in der Wägetechnik meist serielle Schnittstellen zur Datenübertragung vorgesehen. In der Praxis werden häufig die bekannte Spannungsschnittstelle RS 232 eingesetzt, für die meist schon dreiadrige Datenleitungen ausreichen. Die Verbindung zwischen der anzuschließenden Eingabe- oder Systemkomponente und der Waage bzw. dessen separate Auswertevorrichtung geschieht meist über galvanische Steckverbindungen. Da derartige Wägevorrichtungen auch unter ungünstigen Umgebungsbedingungen eingesetzt werden, müssen sie mindestens gegen eindringende Feuchtigkeit und Staubeinwirkung geschützt sein, so daß zur Datenübertragung vorher meist Schutzgehäuseteile oder besondere Abdeckungen zu entfernen sind. Dieser Aufwand ist zumindest bei späteren kurzzeitigen Datenübertragungen zwischen der Auswertevorrichtung der Waage und anderen System- oder Eingabekomponenten verhältnismäßig aufwendig.

Der Erfindung liegt deshalb die Aufgabe zugrunde, eine Verbindung zum Datenaustausch zwischen der Auswertevorrichtung einer elektromechanischen Waage und einer weiteren Eingabe- oder Systemkomponente zu schaffen, die schnell anschließbar ist und auch bei ungünstigen Umgebungsbedingungen keine besonderen Schutzmaßnahmen erfordert.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, daß durch die Datenübertragung mittels einer optischen Schnittstelle über ein Sichtfenster die Dichtigkeit des Gehäuses auch während der Datenübertragung erhalten bleibt. Dies hat gleichzeitig den Vorteil, daß zur Datenübertragung kein Montagearbeiten notwendig sind, um die Verbindung herzustellen oder den Schutz gegen ungünstige Umgebungseinflüsse aufrecht zu erhalten. Eine derartige Verbindung zum Datenaustausch hat auch den Vorteil, daß sie weitgehend störungsfrei arbeitet, da weder Kontakte verschleißen oder oxidieren können.

Die Erfindung hat weiterhin den Vorteil, daß durch die magnetische Fixierung die Datenübertragung nicht durch Störkörper in der Übertragungsstrecke beeinträchtigt werden kann. Darüber hinaus gestattet eine derartige Fixierung vorteilhafterweise eine eindeutige Fokussierung zwischen der optischen Sende- und Empfangsvorrichtung, was die Übertragungssicherheit erheblich verbessert. Durch die Anordnung des Sichtfensters auf der Anzeige- und Bedieneinheit wird vorteilhafterweise eine gute Zugänglichkeit und Handhabbarkeit erreicht, wodurch auf einfache und schnelle Weise der Datenübertragungsvorgang durchführbar ist.

Bei einer besonderen Ausbildung der Erfindung sind noch mechanische Fixiermittel vorgesehen, durch die vorteilhafterweise die Fokussiergenauigkeit erhöht wird. Dadurch sind auch längere Datenübertragungen störungsfrei möglich, da hierdurch eine Parallelverschiebung des Aufnahmekopfes zum Sichtfenster weitgehend ausgeschlossen ist. Dadurch wird durch die passgenaue Aufsetzmöglichkeit auch der Anschlussaufwand verringert, so dass sich die Verbindung auf einfachste Art herstellen und abnehmen läßt.

Die Erfindung wird anhand eines Ausführungsbeispiels, das in der Zeichnung dargestellt ist, näher erläutert. Es zeigen:
- Fig. 1:: eine grafische Darstellung einer separaten Auswertevorrichtung mit Anzeige- und Bedienfeld, und
- Fig. 2:: eine grafische Darstellung eines Anschlußkopfes zur Datenübertragung zwischen der Auswertevorrichtung und einer elektronischen Rechenanlage.

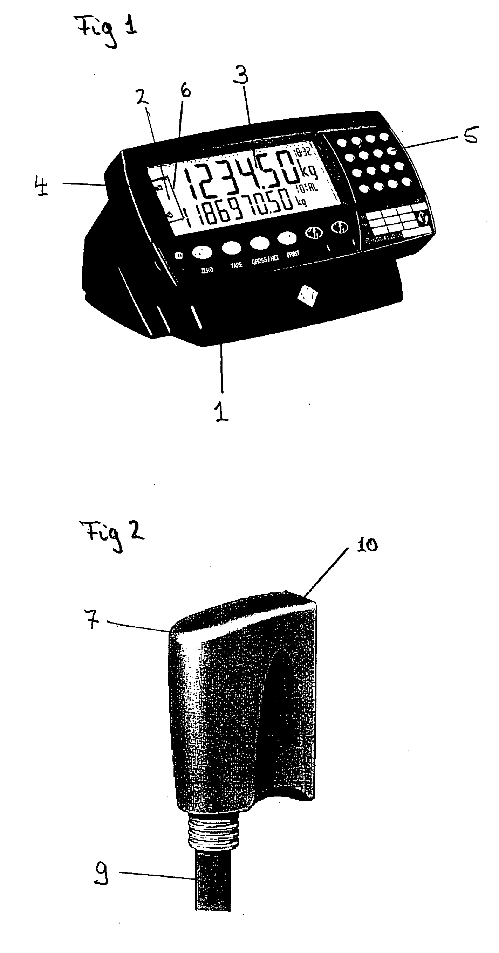

In Fig. 1 der Zeichnung ist eine Auswertevorrichtung 1 einer elektromechanischen Waage mit einer Infrarotschnittstelle dargestellt, die ein Sichtfenster 2 auf der Anzeige- 3 und Bedieneinheit 5 enthält und mit magnetischen 6 und mechanischen Fixiermitteln 4 zur Anbringung eines Anschlusskopfes 7 auf dem Sichtfenster 2 ausgestattet ist.

Die Auswertevorrichtung 1 der elektromechanischen Waage ist als separate Baueinheit ausgebildet und mit dieser über ein Kabel verbunden. Eine derartige Auswertevorrichtung 1 kann aber auch in einem Waagengehäuse integriert sein und mit dieser eine Einheit bilden. Die Auswertevorrichtung 1 enthält in seiner Anzeige- 3 und Bedieneinheit 5 ein Bedienfeld mit einer alphanumerischen Tastatur und Sondertasten zur Eingabe und Steuerung von Wägevorgängen und Sonderfunktionen wie Tara-Anzeige oder Rücksetzfunktion und dergleichen.

Weiterhin enthält die Auswertevorrichtung 1 als Anzeigeneinheit 3 noch ein Anzeigefeld mit einer zweireihigen Zifferanzeige für eine sechsstellige Einzel- und eine neunstellige Gesamtgewichtsanzeige für vorgegebene Einheiten in Gramm, Kilogramm oder Tonnen. Diese Anzeige 3 ist mit LCD-Anzeigeelementen ausgestattet und mit einer flachen durchsichtigen Abdeckplatte vorzugsweise aus Kunststoff abgedeckt.

Am linken Endbereich des Anzeigefeldes 3 ist als Teil der Infrarotschnittstelle ein Sichtfenster 2 vorgesehen, hinter dem sich Empfangsmittel der Infrarotschnittstelle befinden. Diese Empfangsmittel enthalten mindestens ein lichtempfindliches Halbleiterbauelement, das die empfangenen Lichtsignale in digitale elektrische Signale umwandelt und der elektronischen Auswertevorrichtung 1 zuführt. Im Bereich des Sichtfensters 2 sind noch zwei Rundstifte 4 angeordnet, die mechanische Fixierelemente darstellen. Im Bereich der Rundstifte 4 ist unter oder auf der Abdeckplatte noch ein Dauermagnet 6 oder eine Platte aus ferromagnetischem Werkstoff angebracht, das ein magnetisches Fixiermittel darstellt.

Zur Datenübertragung über die Schnittstelle sind noch Anschlussmittel vorgesehen, die auf die Abdeckplatte aufgesetzt werden. Diese Anschlussmittel sind als Anschlusskopf 7 ausgebildet, der in Fig. 2 der Zeichnung dargestellt ist. Dieser Anschlusskopf 7 ist mit einem Kabel 9 versehen und an einen Personalcomputer (PC) als Eingabekomponente angeschlossen. Mit einem derartigen PC können vorgegebene Parameter als digitale Daten in die Waage eingegeben werden. Mit einem derartigen Anschlusskopf 7 sind aber auch andere Systemkomponenten mit der Auswertevorrichtung 1 der Waage verbindbar, wie beispielsweise Datenspeicher, Drucker und dergleichen.

Der Anschlusskopf 7 ist als Sendemittel ausgebildet, in dem die zu übertragenden elektrischen digitalen Daten mit Hilfe von speziellen Leuchtdioden in Lichtsignale umgewandelt werden. Der Anschlusskopf 7 besteht aus einem Rundgehäuse, das an einer Stirnseite 10 eine flache ebene Aufsetzfläche enthält, unter der die Leuchtdiode angebracht ist, die durch eine durchsichtige Kunststoffplatte abgedeckt wird. Diese Aufsetzfläche besitzt eine Größe, die der Übertragungsfläche auf dem Anzeigefeld 3 entspricht. Auf der Aufsetzfläche des Anschlusskopfes 7 sind noch zwei korrespondierende Aussparungen vorgesehen, in die die Rundstifte 4 auf dem Anzeigefeld 3 einsteckbar sind und ebenfalls mechanische Fixiermittel darstellen. Hinter der Aufsetzfläche 10 sind als magnetische Fixiermittel ebenfalls ein Dauermagnet oder eine Platte aus ferromagnetischem Material angebracht, die mit den magnetischen Fixiermitteln unter dem Anzeigefeld 3 korrespondieren.

Zur Datenübertragung wird der Anschlusskopf 7 so auf die freie Fläche auf das Anschlussfeld 3 aufgesetzt, dass die korrespondierenden mechanischen Fixiermittel 4 ineinander greifen und die beiden Abdeckflächen dicht aufeinander liegen und die Sendedioden gegenüberliegend zu den entsprechenden Sichtfenster 2 angeordnet sind. Dabei wird der Anschlusskopf 7 durch die korrespondierenden magnetischen Fixiermittel 4 auf dem Anzeigefeld 3 gehalten, so dass das ganze die Infrarotschnittstelle zur seriellen Datenübertragung darstellt. Durch entsprechende paarweise Anordnung der Sende- und Empfangsmittel ist auch ein bidirektionaler Datenaustausch möglich.

Zur mechanischen Fixierung in paralleler Richtung der Auflageflächen können die ineinander greifenden Stifte 4 und Aussparungen auch in vertauschter Anordnung vorgesehen werden. Die mechanischen Fixiermittel 4 können aber auch lediglich als umrandete Vertiefungen ausgebildet sein, in die der Aufnahmekopf eingepasst ist. Bei entsprechender Stärke der Dauermagnete kann auch auf eine mechanische Fixierung verzichtet werden, wenn beispielsweise die Aufsetzfläche auf dem Anzeigefeld 3 bekannt oder markiert ist. Die magnetischen Fixiermittel 6 sind daher nur so stark auszubilden, dass der Anschlusskopf 7 auf leichte Weise wieder manuell von dem Anzeigefeld 3 abnehmbar ist. Dabei können die magnetischen Fixiermittel 6 auch als Elektromagnete vorgesehen werden, die durch spezielle Schaltmittel vor der Datenübertragung in Betrieb setzbar sind. Durch diese magnetische Fixierung liegen die Empfangs- und Sendemittel spaltfrei aufeinander, so das auch bei längeren Übertragungszeiten ein störungsfreier Übertragungsbetrieb gewährleistet ist.

## Patentansprüche

1. Schnittstelle für eine Auswertevorrichtung (1) einer Waage, die Anschlussmittel zur Übertragung von Datensätzen zwischen der Auswertevorrichtung (1) und Eingabekomponenten oder anderen Systemkomponenten aufweist, wobei die Auswertevorrichtung (1) eine Anzeige- (3) und eine Bedieneinheit (5) besitzt, **dadurch gekennzeichnet, dass** an der Anzeige- (3) oder Bedieneinheit (5) zur optischen Datenübertragung ein Sichtfenster (2) und magnetische Fixiermittel (6) vorgesehen sind und dass die Anschlussmittel zur Datenübertragung als Anschlusskopf (7) ausgebildet sind, der auf dem Sichtfenster (3) aufsetzbar und durch die korrespondierenden magnetischen Fixierelemente (6) abnehmbar mit der Anzeige- (3) oder Bedieneinheit (5) verbunden ist.

2. Schnittstelle nach Anspruch 1, **dadurch gekennzeichnet, dass** diese als Infrarotschnittstelle ausgebildet ist und an der Anzeige- (3) oder Bedieneinheit (5) optische Sende- und/oder Empfangsmittel zur Datenübertragung aufweist.

3. Schnittstelle nach Anspruch 1 oder 2, **dadurch gekennzeichnet, dass** an der Anzeige- (3) oder Bedieneinheit (5) und am Anschlusskopf (7) zusätzlich noch korrespondierende mechanische Fixiermittel (4) vorgesehen sind, die zur Fokussierung der Sende- und Empfangsmittel dienen.

4. Schnittstelle nach einem der vorhergehenden Ansprüche, **dadurch gekennzeichnet, dass** die magnetischen Fixiermittel (6) mindestens einen Magneten und einen damit korrespondierenden weiteren Magneten oder ein ferromagnetisches Teil darstellen, wobei jeweils eines dieser Teile am Anschlusskopf (7) und eines der korrespondierenden Teile an der Anzeige- (3) oder Bedieneinheit (5) angeordnet ist.

5. Schnittstelle nach einem der vorhergehenden Ansprüche, **dadurch gekennzeichnet, dass** die korrespondierenden mechanischen Fixiermittel aus Stiften (4) und Aussparungen bestehen, die ineinander steckbar sind wobei jeweils ein Teil (4) an der Anzeige- (3) oder Bedieneinheit (5) und das andere korrespondierende Teil am Anschlusskopf (7) angeordnet ist.

6. Schnittstelle nach einem der vorhergehenden Ansprüche, **dadurch gekennzeichnet, dass** der Anschlusskopf (7) mindestens optische Sendemittel und die Anzeige- (3) oder Bedieneinheit (5) mindestens optische Empfangsmittel enthält, die bei passgerechter Auflage des Anschlusskopfes (7) gegenüberliegend angeordnet sind.
